# EUROPÄISCHE PATENTSCHRIFT

(11) **EP 1 681 205 B1**
(45) Veröffentlichungstag und Bekanntmachung des Hinweises auf die Patenterteilung: **18.06.2008**
(21) Anmeldenummer: 05024722.0
(22) Anmeldetag: 11.11.2005
(51) Int. Cl.: B60R 7/06, B60R 11/02

(54) **Handschuhkasten in einem Kraftfahrzeug**
Glove box in a motor vehicle
Boîte à gants dans un véhicule automobile

(30) Priorität: 14.01.2005 DE 102005001883
(43) Veröffentlichungstag der Anmeldung: 19.07.2006
(73) Patentinhaber: Volkswagen Aktiengesellschaft, 38436 Wolfsburg (DE)
(72) Erfinder: Marondel, Hubert, 38108 Braunschweig (DE); Le Claire, Christoph, 38104 Braunschweig (DE)

(56) Entgegenhaltungen:
- DE-A1- 3 833 499
- DE-A1- 10 259 414
- DE-C1- 4 006 487
- FR-A- 2 819 765

## Beschreibung

Die Erfindung betrifft einen Handschuhkasten in einem Kraftfahrzeug mit den Merkmalen des Oberbegriffs des Patentanspruchs 1.

Handschuhkästen in Kraftfahrzeugen sind schon seit dem Beginn des Automobilbaus bekannt. Die folgenden Schutzrechte bzw. Schutzrechtsanmeldungen zeigen exemplarisch einen kleinen Teil der Vielzahl von bekannten, unterschiedlichen Handschuhkästen in Kraftfahrzeugen: US 2,202,277, US 2,298,415, US 4,109,955, US 4,355,837, EP 724 982 A2, EP 919 431 B1, EP 1 350 675 A2, DE 29 41 243, DE 43 02 948 A1, DE 299 03 165 U1 und DE 199 30 059 A1.

Um den Stauraum in Handschuhkästen besser und ökonomischer nutzen zu können, werden Handschuhkästen in verschiedene Fächer unterteilt. Die US 4,099,814 beschreibt zum Beispiel einen herausnehmbaren Fachboden für einen Handschuhkasten. Der Fachboden umfasst zwei Teile, die längenbeweglich miteinander verbunden sind, so dass der Fachboden der Breite des Handschuhkastens angepasst werden kann. Außerdem weist der Fachboden jeweils an seinen Enden zwei umklappbare Beine auf. In seiner Nichtgebrauchsposition ist der Fachboden so relativ klein zusammenlegbar.

Handschuhkästen werden zur besseren Übersicht und um leichter Ordnung zu halten durch Fachböden unterteilt. Die DE 199 02 666 C1 beschreibt einen solchen Handschuhkasten in einem Kraftfahrzeug mit einer Klappe, die um eine Schwenkachse zwischen einer öffnungsposition und einer Schließposition schwenkbar gelagert ist, und einer waagerechten Querwand (Fachboden), der innerhalb des Handschuhkastens angeordnet ist. Die Querwand (Fachboden) ist fest eingebaut und unterteilt den Handschuhkasten in etwa zwei gleich große Fächer. Diese Fachböden können auch herausnehmbar sein (zum Beispiel Opel Astra Modelljahr 2004).

Normalerweise werden Bordbücher, Servicehefte und Bedienungsanleitungen im Handschuhkasten aufbewahrt. Aus dem Stand der Technik sind ebenfalls Ablageflächen unterhalb des Lenkrades oder in der A-Säulenverkleidung (DE 198 24 467 A1) bekannt.

Seitdem CD-Spieler die herkömmlichen Kassettenrecorder im Kraftfahrzeug abgelöst haben, sind auch CD-Wechsler im Einsatz. Solche CD-Wechsler werden üblicherweise nicht in unmittelbarer Nähe der gemeinsamen Bedieneinheit von Autoradio und CD-Spieler verbaut, sondern in abgelegenen Räumen, die den erforderlichen, Platz bieten und trotzdem gut zugänglich sind.

Aus der DE 103 14 197 A1 ist beispielsweise ein CD-Wechsler bekannt, der in einer Staustruktur unter einem Fahrzeugsitz angebracht ist.

Die DE 198 56 314 A1 schlägt die Aufnahme von CD-Wechslern in Innenausstattungsteilen oder Innenverkleidungsteilen, beispielsweise der Innenverkleidung im Kofferraum, vor. Solche Aufnahmevorrichtungen für CD-Wechsler können leicht gedämpft werden, so dass Fahrbahnunebenheiten weniger auf das Gerät übertragen werden.

Die DE 198 34 134 A1 beschreibt eine Gerätebehälteranordnung für verschiedene technische Geräte, wie beispielsweise einen CD-Wechsler, der anstelle eines Reserverades in einer Reserveradmulde lagegesichert angeordnet ist und annähernd den gesamten Raum der Reserveradmulde einnimmt.

In der DE 198 08 568 A1 ist ein zweisitziges Kraftfahrzeug beschrieben, bei dem hinter den beiden Fahrzeugsitzen oder zwischen deren Sitzlehnen elektrische Komponenten angebracht sind, weil bei einem zweisitzigen Sportwagen, insbesondere bei Cabriolets, so der chronisch knappe Platz im Kofferraum nicht für diese elektrischen Komponenten beansprucht wird. Als Beispiel für solche elektrischen Komponenten wird hier insbesondere auf CD-Wechsler eingegangen.

Aus der EP 0 925 204 B1 ist ein Kraftfahrzeug, das in der Mittelkonsole verschiedene Module wechselweise aufnehmen kann, bekannt. Als eines dieser Module ist eine Hi-Fi-Anlage mit einem CD-Wechsler vorgeschlagen.

Aus der DE 102 59 414 A1 ist ein gattungsgemäßer Handschuhkasten in einem Kraftfahrzeug bekannt, der eine Klappe sowie einen innerhalb des Handschuhkastens angeordneten Fachboden aufweist. Die Klappe ist um eine erste Schwenkachse schwenkbar, während der Fachboden um eine zweite Schwenkachse schwenkbar ist. Aus der DE 40 06 487 C1 ist ein weiteres Ablagefach für Kraftfahrzeuge bekannt, das einen Zwischenboden aufweist, der im Bedarfsfall in eine im Wesentlichen den gesamten Stauraum des Ablagefaches freigebende Stellung verbracht werden kann.

Die Aufgabe der Erfindung besteht ausgehend vom nächstliegenden Stand der Technik darin, dass ein bekannter Handschuhkasten mit einem Fachboden dahingehend weiterentwickelt wird, dass die zwei entstehenden Bereiche für einerseits täglich genutzte Dinge und andererseits für selten benutzte Dinge offensichtlich verwendet werden können.

Die Aufgabe wird erfindungsgemäß mit den Merkmalen des Anspruchs 1 gelöst. Vorteilhafte Ausführungen beschreiben die Unteransprüche.

In einer bevorzugten Ausführungsform verlaufen die erste Schwenkachse des Handschuhkastens und die zweite Schenkachse des Fachbodens im Wesentlichen parallel zueinander.

Somit ist der Handschuhkasten im unteren Bereich für die Ablage der täglichen Dinge wie zum Beispiel Brille, Sonnenbrille und Parkscheibe geeignet, während auf dem Fachboden, das heißt im oberen Bereich des Handschuhkastens, selten benutzte Dinge abgelegt werden. Solche selten benutzten Dinge sind zum Beispiel das Bordbuch, das Serviceheft oder die Bedienungsanleitung des Kraftfahrzeugs. Dieser obere Bereich des Handschuhkastens oberhalb des Fachbodens eignet sich auch beispielsweise für die Installation eines CD-Wechslers.

Wenn man die selten benutzten Dinge wie zum Beispiel das Bordbuch und den CD-Wechsler beim Öffnen des Handschuhkastens nicht sehen will, sondern nur der untere Bereich für die täglichen Dinge sichtbar sein soll, ist es zweckmäßig, den oberen Fachboden gar nicht erst nach unten zu klappen. Wenn eine vorteilhafte Ausführungsform des Handschuhkastens also geöffnet wird, klappt der untere Teil nach unten und ist für den Benutzer zugänglich. Der Fachboden mit dem darüber liegenden Raum für die selten benutzten Dinge ist erst durch eine weitere Entriegelung zugänglich.

Erfindungsgemäß wird beim Schließen der Klappe des Handschuhkastens der Fachboden in seine geschlossene Stellung mitgenommen. In einer bevorzugten Ausführungsform ist die Öffnungsbewegung des Handschuhkastens und des Fachbodens entkoppelt, während die Schließbewegung des Handschuhkastens und des Fachbodens wie zuvor beschrieben gekoppelt ist.

In einer anderen, hier nicht näher beschriebenen Ausführungsform kann es aber auch vorteilhaft sein, wenn die Öffnungsbewegungen des Handschuhkastens und des Fachbodens gekoppelt sind.

Für die Zwangskopplung des Handschuhkastens mit dem Fachboden eignet sich zum Beispiel ein gerecktes PES-Seil (Polyethersulfon-Seil) oder ein Stahlseil.

Besonders vorteilhafte Ausführungsbeispiele der Erfindung sind in der Zeichnung dargestellt.
Es zeigen:
- Figur 1: eine perspektivische Schrägansicht des erfindungsgemäßen Handschuhkastens im geöffneten Zustand mit einer Aufnahme,
- Figur 2: zeigt denselben Handschuhkasten wie in Figur 1 im Schnitt II-II,
- Figur 3: den erfindungsgemäßen Handschuhkasten mit Darstellung der Kopplung zwischen dem Fachboden (Aufnahme) und dem Handschuhkasten,
- Figur 4: die Anbindung des erfindungsgemäßen Seils am Handschuhkasten und an der Aufnahme,
- Figur 5: die Anbindung des Seils an der Rückwand des Handschuhkastens,
- Figur 6: den Verfahrweg des Seils bei bestimmten Schließwinkeln des Handschuhkastens,
- Figur 7: den erfindungsgemäßen Handschuhkasten in der geschlossenen Position,
- Figur 8: die Verrastposition des Fachbodens bei einem Seil mit Überlänge,
- Figur 9: die Verrastposition des Fachbodens bei einem Seil mit Unterlänge, und
- Figuren 10-13: die verschiedenen Verrastpositionen der Schlosszunge des Fachbodens in der Handschuhkasten-Verkleidung

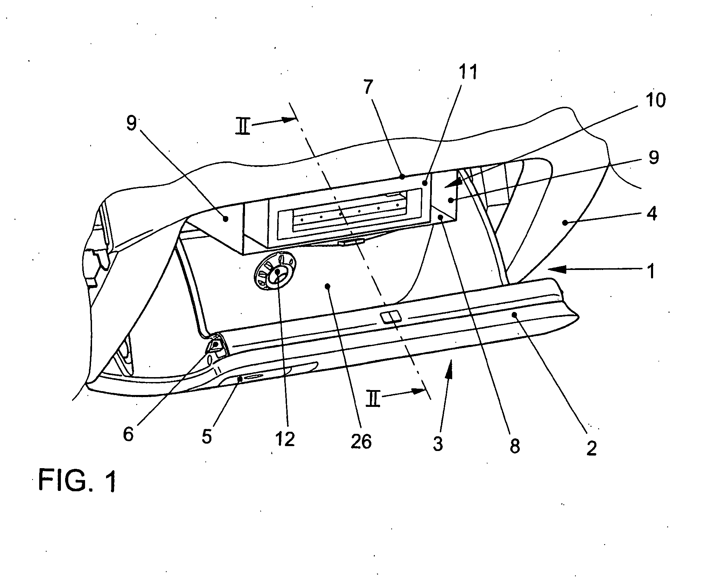

Figur 1 zeigt einen erfindungsgemäßen Handschuhkasten 1 mit einer Klappe 2 in seiner Öffnungsposition 3 in der Verkleidung einer Instrumententafel 4. Die Klappe 2 des Handschuhkastens 1 weist einen Verriegelungsmechanismus auf, der einen Betätigungshebel 5 und eine Schlosszunge 6 umfasst. Im oberen Bereich dieser Figur befindet sich direkt unter der Kante 7 der Instrumententafel 4 ein Fachboden 8 der in diesem Ausführungsbeispiel zwei Seitenwände 9, eine nicht dargestellte Rückwand und einen nicht dargestellten Deckel aufweist, so dass eine Aufnahme 10 entsteht. In diese Aufnahme 10 ist ein CD-Wechsler 11 eingeschoben. Unterhalb des CD-Wechslers ist eine Belüftungsöffnung 12 zu erkennen, die an die Klimaanlage des Kraftfahrzeugs angeschlossen ist und den Handschuhkasten klimatisieren kann.

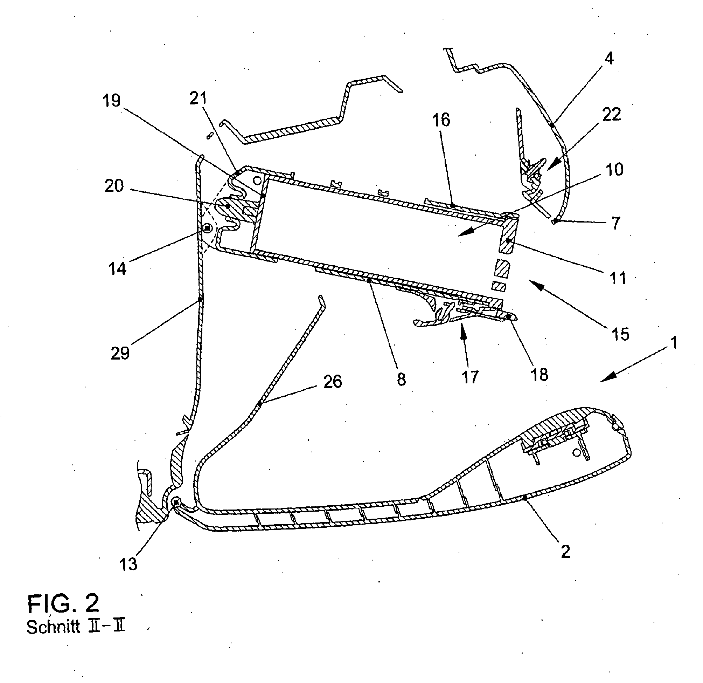

In Figur 2 ist der in Figur 1 perspektivisch dargstellte Handschuhkasten im Schnitt II-II gezeigt. Hier ist der Handschuhkasten 1 mit seiner Klappe 2 zu erkennen, die um eine erste Schwenkachse 13 schwenkbar gelagert ist und dem Fachboden 8, der innerhalb des Handschuhkastens 1 angeordnet ist und der um eine zweite Schwenkachse 14 zwischen einer geöffneten Stellung 15 und einer geschlossenen Stellung schwenkbar gelagert ist. Der Fachboden 8 weist in diesem Ausführungsbeispiel einen Deckel 16 auf, so dass der Fachboden 8 zu einer Aufnahme 10 wird. Diese Aufnahme 10 weist einen Verriegelungsmechanismus 17 an der Unterseite des Fachbodens 8 auf, der wiederum eine Schlosszunge 18 hat. In die Aufnahme 10 ist in dieser Figur der CD-Wechsler 11 eingeschoben, der an seiner Rückwand 19 eine Zunge 20 aufweist, die mit der Rückwand 21 der Aufnahme 10 verrastet. Die Zunge 18 des Verriegelungsmechanismus 17 verrastet in einem Verriegelungsmechanismus 22, der an der Kante 7 der Instrumententafel 4 befestigt ist.

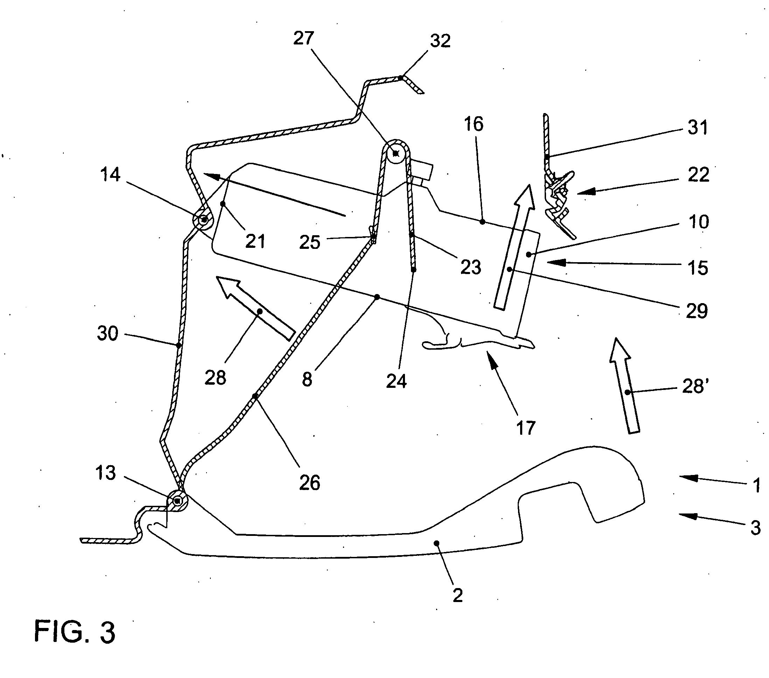

In Figur 3 ist die Zwangsschwenkbewegung zwischen der Klappe 2 und dem Fachboden 8 dargestellt, die über eine nachgiebige Verbindung zwischen der Klappe und dem Fachboden 8 erfolgt. Diese nachgiebige Verbindung ist im vorliegenden Ausführungsbeispiel ein Seil 23. Das Seil ist in einem Anbindungspunkt 24 mit der Aufnahme 10 verbunden und in einem Anbindungspunkt 25 mit einer Rückwand 25 des Handschuhkastens 1. Das Seil 23 läuft vom Anbindungspunkt 24 über eine Umlenkung 27 zum Anbindungspunkt 25. Die Schließbewegung des Handschuhkastens ist in dieser Figur mit Hilfe der beiden Pfeile 28 und 28' und die Schließbewegung der Aufnahme 10 von der geöffneten Stellung 15 in die geschlossene Stellung mit Hilfe des Pfeils 29 dargestellt. Der Bauraum für den Handschuhkasten 1 und die Aufnahme 10 wird von einer Handschuhkastenverkleidung begrenzt. Die Handschuhkastenverkleidung trägt im hinteren Bereich, das heißt in Fahrtrichtung nach vorne gesehen, das Bezugszeichen 30, im vorderen Bereich, das heißt zur Öffnung des Handschuhkastens hin, das Bezugszeichen 31 und im oberen Bereich das Bezugszeichen 32. Die Rückwand 26 des Handschuhkastens 1 liegt somit in der Schließposition 3' an der hinteren Handschuhkastenverkleidung 30 an.

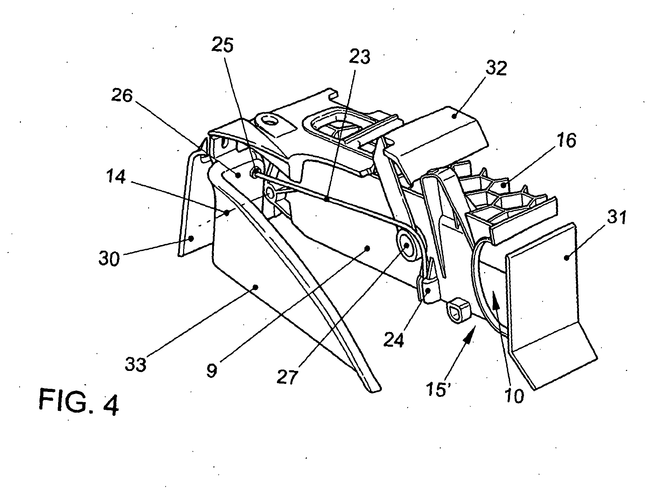

Die Figur 4 ist eine perspektivische Ansicht der Anbindungspunkte 24 und 25 und des Umlenkungspunkts 27. In dieser Figur ist noch einmal deutlich zu sehen, dass der Umlenkungspunkt 27 an der Handschuhkastenverkleidung befestigt ist, der Anbindungspunkt 25 an der Rückwand 26 des Handschuhkastens 1 und der Anbindungspunkt 24 am Fachboden 8 bzw. an der Aufnahme 10. Im Vordergrund ist eine Seitenwand 33 des Handschuhkastens 1 zu erkennen.

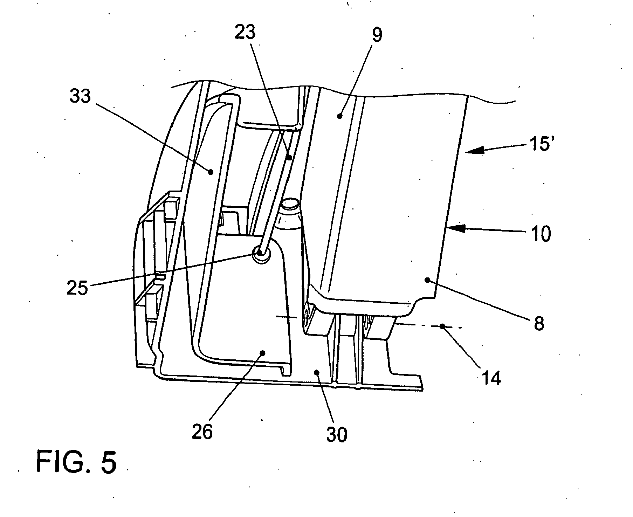

Figur 5 verdeutlicht die rückwärtige Anbindung des Seils 23 am Anbindungspunkt 25 an der Rückwand 26 des Handschuhkastens 1.

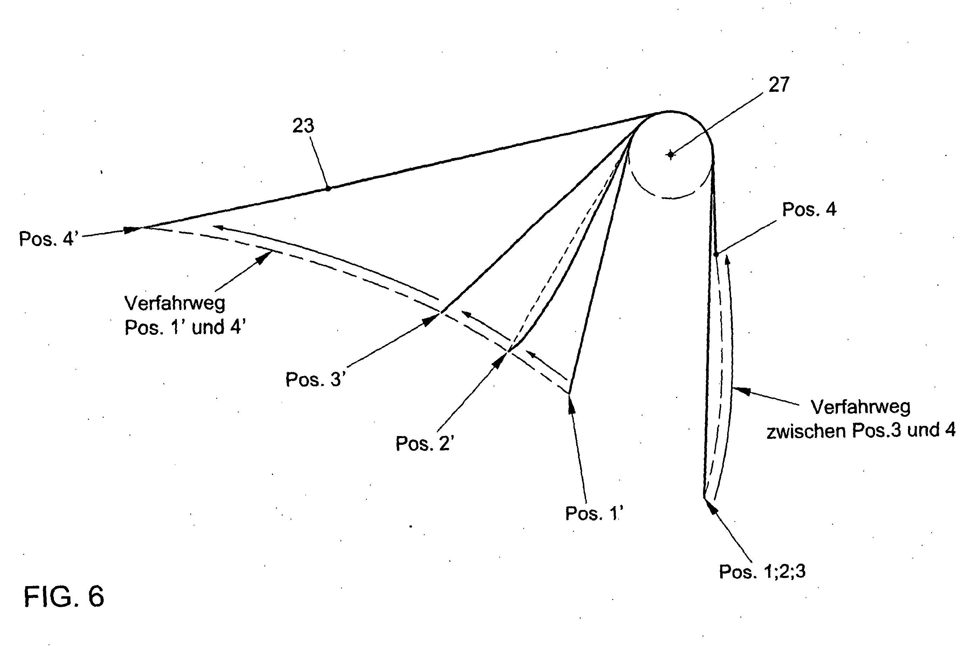

In der Figur 6 ist der Verfahrensweg des Seils 23 bei bestimmten Schließwinkeln des Handschuhkastens 1 dargestellt. Die Positionen 1, 2, 3 und 4 entsprechen dem Anbindungspunkt 24 am Fachboden 8 bzw. an der Aufnahme 10. Die Positionen 1', 2', 3' und 4' entsprechen dem Anbindungspunkt 25 am Handschuhkasten 1. Durch unterschiedliche Längen der Verfahrenswege beider Anbindungspunkte 24 und 25 ergibt sich, dass das Seil erst ab einem bestimmten Schließwinkel des Handschuhkastens 1 (Position 3) gespannt wird. Um den Verriegelungsmechanismus 17 der Aufnahme 10 rechtzeitig anzuheben und nicht in den Flock zu tauchen, muss die Länge des Seils 23 möglichst gering gehalten werden und der Punkt zum Spannen des Seils möglichst früh einsetzen. Hierdurch ergibt sich eine ideale Position der Umlenkung die durch den Bauraum eingeschränkt ist. Wiederum muss das Seil 23 bei geöffnetem Handschuhkasten 1 lang genug sein, damit die Aufnahme 10 ihre untere Endposition (Position 1) erreichen kann.

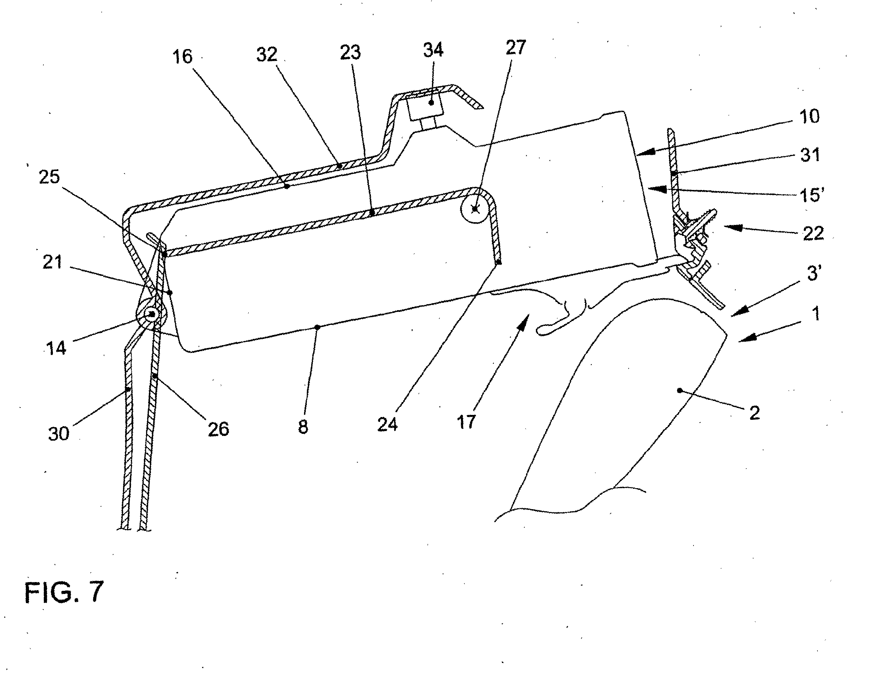

In Figur 7 befindet sich der Handschuhkasten 1 in seiner Schließposition 3' und die Aufnahme 10 in ihrer geschlossenen Stellung 15'. In einer bevorzugten Ausführungsform weist die Aufnahme 10 an ihrem Deckel 16 einen Anschlagpuffer 34 (zum Beispiel DE 199 53 448 A1) auf, der an der oberen Handschuhkastenverkleidung 32 anschlägt.

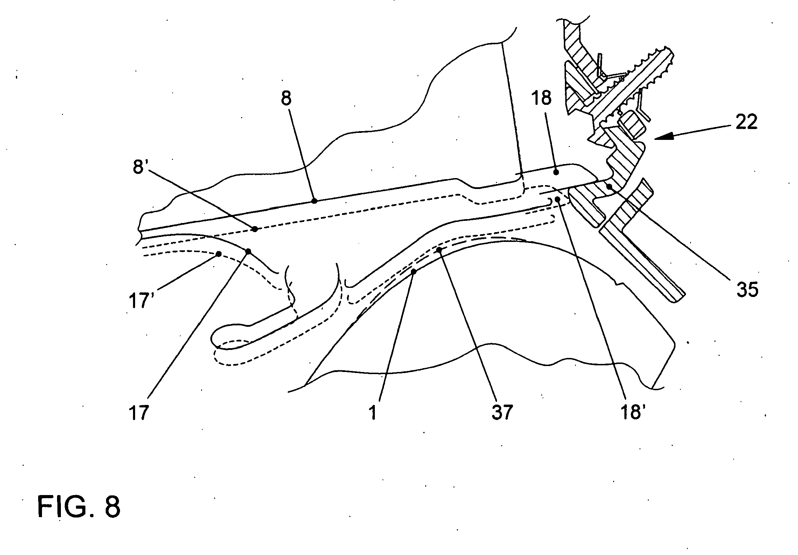

In Figur 8 ist die Verrastposition des Fachbodens 8 bei einem Seil 23 mit Überlänge dargestellt. Bei dieser Variante wird die Aufnahme 10 mit dem Seil 23 nur bis ungefähr 2,5 mm unterhalb des Rastpunktes gezogen. Kurz vor dem Verschließen des Handschuhkastens 1 kommt der Verriegelungsmechanismus 17 der Aufnahme 10 auf dem Handschuhkasten 1 zu liegen und muss nun durch die Überdrückung des Handschuhkastens 1 in seine Rastposition gehoben werden. Durch Toleranzen zwischen dem Handschuhkasten und dem Unterteil der Instrumententafel 4, sowie Torsion der Bauteile beim Verschließen, kann es vorkommen, dass die Schlosszunge 18 zwischen Handschuhkasten 1 und Rastbuchse 35 in Position 18' zu liegen kommt. Zum Schutz eines beflockten Handschuhkastens 1 kann eine Führungsrippe 37 auf dem Handschuhkasten 1 gebildet werden. Der korrekt verriegelte Fachboden ist in der durchgezogenen Linie (8, 17, 18) und der noch nicht verrastete Fachboden in der gestrichelten Linie (8', 17', 18') dargestellt. Der Nachteil dieser Variante (Seil mit Überlänge) ist, dass bei einem Handschuhkasten 1 ohne Führungsrippe 37 die Schlosszunge 18 auf einem beflockten Handschuhkasten 1 gleitet. Durch große Toleranzen ist ein sicheres Verschließen bei langsamer Betätigung des Handschuhkastens nicht immer gewährleistet.

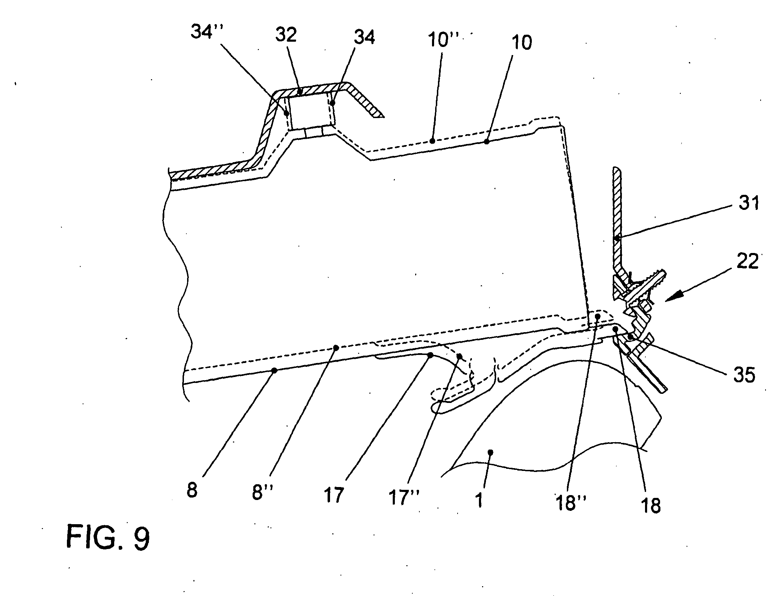

In Figur 9 ist im Vergleich zu Figur 8 die Variante des Seils 23 mit Unterlänge dargestellt. Bei dieser Variante wird die Aufnahme 10 mit dem Seil 23 bis auf ungefähr 1,5 mm oberhalb des Rastpunktes gezogen (gestrichelte Linien). Durch den oberen Anschlagpuffer 34 bzw. 34" in der Aufnahme 10 und der Spannung im Seil 23 ist die Schlosszunge 18 bzw. 18" in der Position fixiert. Beim Setzen der Kunststoffteile und des Seils 23 kommt die Schlosszunge 18 bzw. 18" in der gewünschten Position in der Rastbuchse 35 zu liegen. Wird das Seil 23 zu kurz gewählt, kann die Aufnahme 10 ihre untere Endposition (durchgezogene Linien) nicht erreichen und somit steht das Seil 25 und das Gehäuse immer unter Spannung. Der Vorteil dieser Lösung ist, dass es immer zu einem sicheren Verrasten kommt und ein Klappern sicher ausgeschlossen wird. Der Nachteil der Variante des Seils mit Unterlänge (Figur 9) ist, dass es bei dieser Variante zu einer Geräuschbildung kommen kann und Spannungen im System durch erhöhte Bedienkräfte beim Schließen des Handschuhkastens auftreten können.

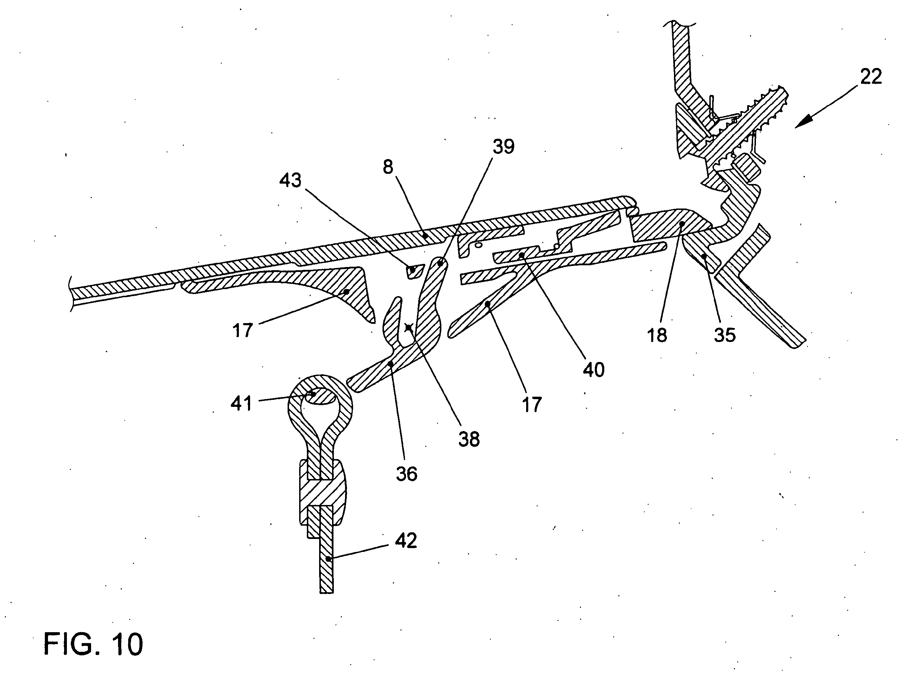

Die Figuren 10-13 zeigen verschiedene Verrastpositionen der Schlosszunge 18 des Fachbodens 8 in dem Verriegelungsmechanismus 22 des Handschuhkastens 1. In Figur 10 ist die Schlosszunge 18 in der Rastbuchse 35 verrastet und der Verriegelungsmechanismus 17 somit geschlossen. Der Verriegelungsmechanismus 17 weist zum Endriegeln einen Hebel 37 auf, der um eine Drehachse 38 beweglich gelagert ist. Der Hebel 37 greift an seinem oberen Ende 39 in einen Schieber 40 ein. Am unteren Ende des Hebels 37 befindet sich ein optionales Seil 42 zum Endriegeln. Statt dem Seil 42 kann das untere Ende 41 des Hebels 37 auch von Hand betätigt werden.

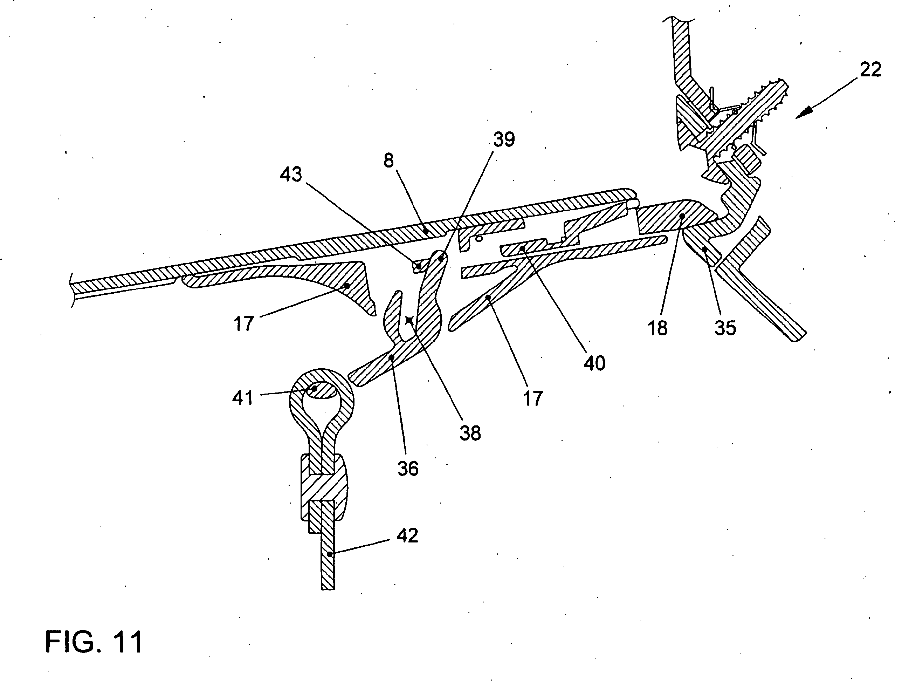

In Figur 11 der Fachboden 8 etwas überdrückt (ca. 1 mm). Das obere Ende 39 des Hebels 37 liegt dabei am hinteren Teil 43 des Schiebers 40 an.

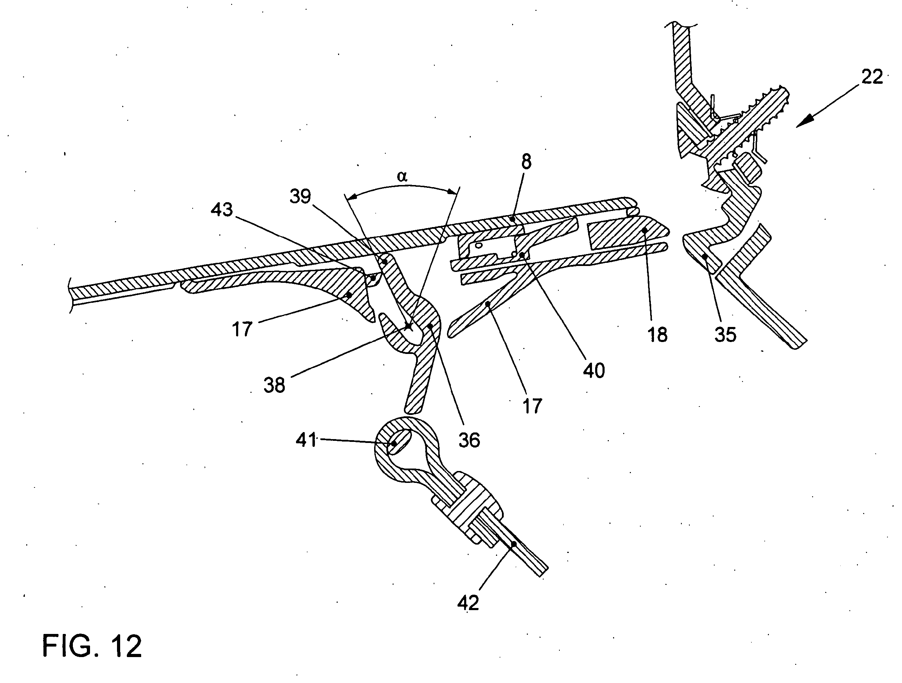

In der Figur 12 ist der Verriegelungsmechanismus 17 geöffnet. Zwischen der Schlosszunge 18 und der Rastbuchse 35 befinden sich ca. 2 mm Luft. Der Hebel 37 ist gegenüber seiner geschlossenen Stellung (Figur 10) jetzt um ca. α = 47° nach hinten bewegt. Der obere Teil 39 des Hebels 37 liegt dabei immer noch am hinteren Teil 43 des Schiebers 40 an. Die Schlosszunge 18 ist somit maximal zurückgezogen.

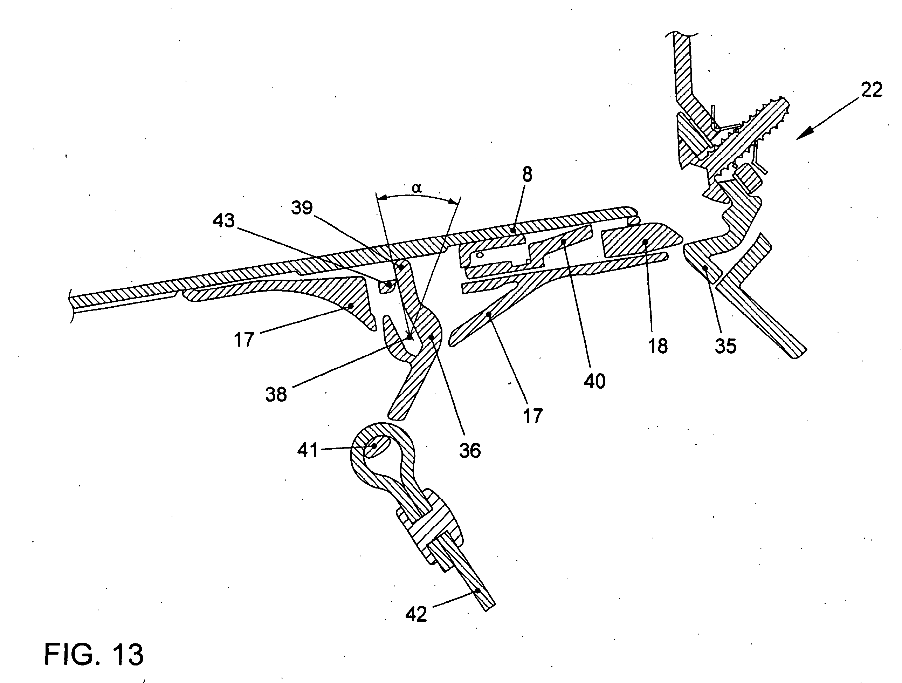

In der Figur 13 befindet sich zwischen der Schlosszunge 18 und der Rastbuchse 35 keine Luft mehr. Der Hebel 37 ist gegenüber seiner geschlossenen Stellung (Figur 10) um ca. 35° zurückgezogen.

Somit kann durch entsprechende Auslegung der Länge des Seils 23 und des Verriegelungsmechanismus 22 die Bedienbarkeit des Handschuhkastens 1 optimal ausgelegt werden.

### Bezugszeichenliste

- 1: Handschuhkasten
- 2: Klappe
- 3: Öffnungsposition des Handschuhkastens 1
- 3': Schließposition des Handschuhkastens 1
- 4: Instrumententafel
- 5: Betätigungshebel
- 6: Schlosszunge
- 7: Kante
- 8: Fachboden
- 9: Seitenwand der Aufnahme 10
- 10: Aufnahme
- 11: CD-Wechsler
- 12: Belüftungsöffnung
- 13: erste Schwenkachse
- 14: zweite Schwenkachse
- 15: geöffnete Stellung des Fachbodens 8
- 15': geschlossene Stellung des Fachbodens 8
- 16: Deckel
- 17: Verriegelungsmechanismus der Aufnahme 10
- 18: Schlosszunge
- 19: Rückwand des CD-Wechslers 11
- 20: Zunge des CD-Wechslers 11
- 21: Rückwand der Aufnahme 10
- 22: Verriegelungsmechanismus an der Kante 7
- 23: Seil
- 24: Anbindungspunkt (Seilzug an Fachboden 8 bzw. Aufnahme 10)
- 25: Anbindungspunkt (Seilzug an Handschuhkasten 1)
- 26: Rückwand des Handschuhkastens 1
- 27: Umlenkung (Umlenkpunkt)
- 28: Schließbewegung des Handschuhkastens 1
- 28': Schließbewegung des Handschuhkastens 1
- 29: Schließbewegung der Aufnahme 10
- 30: Handschuhkastenverkleidung (Rückwand)
- 31: Handschuhkastenverkleidung (vorne)
- 32: Handschuhkastenverkleidung (oben)
- 33: Seitenwand des Handschuhkastens 1
- 34: Anschlagpuffer
- 35: Rastbuchse
- 36: Hebel
- 37: Führungsrippe
- 38: Drehachse Entriegelungsseil
- 39: oberes Ende des Hebels 37
- 40: Schieber
- 41: unteres Ende des Hebels 37
- 42: Seil
- 43: hinterer Teil des Schiebers 40

## Patentansprüche

1. Handschuhkasten (1) in einem Kraftfahrzeug mit einer Klappe (2), die um eine erste Schwenkachse (13) zwischen einer Öffnungsposition (3) und einer Schließposition (3') schwenkbar gelagert ist, und einem Fachboden (8), der innerhalb des Handschuhkastens (1) angeordnet ist, wobei der Fachboden (8) um eine zweite Schwenkachse (14) zwischen einer geöffneten Stellung (15) und einer geschlossenen Stellung (15) schwenkbar gelagert ist, wobei zwischen der Klappe (2) und dem Fachboden (8) eine Zwangsschwenkbewegung solcher Art ausgebildet ist, dass die Klappe (2) zumindest in ihrer Schließbewegung den Fachboden (8) in seine geschlossene Stellung (15') mitnimmt, **dadurch gekennzeichnet, dass** die Zwangsschwenkbewegung zwischen der Klappe (2) und dem Fachboden (8) über eine nachgiebige Verbindung (23) zwischen der Klappe (2) und dem Fachboden (8) erfolgt.

2. Handschuhkasten (1) nach Anspruch 1, **dadurch gekennzeichnet, dass** die erste Schwenkachse (13) und die zweite Schwenkachse (14) im Wesentlichen parallel zueinander verlaufen.

3. Handschuhkasten nach einem der Ansprüche 1 oder 2, **dadurch gekennzeichnet, dass** der Fachboden (8) in seiner geschlossenen Stellung (15') verbleibt, wenn die Klappe (2) geöffnet wird.

4. Handschuhkasten nach Anspruch 1, **dadurch gekennzeichnet, dass** die nachgiebige Verbindung ein Seil (23) ist.

5. Handschuhkasten nach Anspruch 4, **dadurch gekennzeichnet, dass** das Seil (23) aus Stahl ist.

6. Handschuhkasten nach Anspruch 4, **dadurch gekennzeichnet, dass** das Seil (23) ein PES-Seil (Polyethersulfon-Seil) ist.

7. Handschuhkasten nach einem der Ansprüche 1 bis 6, **dadurch gekennzeichnet, dass** der Fachboden (8) ein Gehäuseteil eines elektrischen Geräts ist.

8. Handschuhkasten nach einem der Ansprüche 1 bis 6, **dadurch gekennzeichnet, dass** der Fachboden (8) eine Ablage für ein Bordbuch, ein Serviceheft oder eine Bedienungsanleitung eines Kraftfahrzeugs bildet.

9. Handschuhkasten nach einem der Ansprüche 1 bis 6, **dadurch gekennzeichnet, dass** der Fachboden (8) zusätzlich Seitenwände (9), eine Rückwand (20) und einen Deckel (15) aufweist, so dass der Fachboden (8) zu einer nur nach vorne geöffneten Aufnahme (10) wird.

10. Handschuhkasten nach Anspruch 9, **dadurch gekennzeichnet, dass** die Aufnahme (10) eine Ablage für ein Bordbuch, ein Serviceheft oder eine Bedienungsanleitung eines Kraftfahrzeugs bildet.

11. Handschuhkasten nach Anspruch 9, **dadurch gekennzeichnet, dass** die Aufnahme (10) einen CD-Wechsler (11) aufnimmt.

## Claims

1. Glove box (1) in a motor vehicle, with a flap (2) which is mounted in a manner such that it can pivot about a first pivot axis (13) between an open position (3) and a closed position (3'), and a compartment base (8) which is arranged within the glove box (1), wherein the compartment base (8) is mounted in a manner such that it can pivot about a second pivot axis (14) between an open position (15) and a closed position (15), and wherein a compulsory pivoting movement is formed between the flap (2) and the compartment base (8) in such a manner that the flap (2), at least in its closing movement, carries along the compartment base (8) into its closed position (15'), **characterized in that** the compulsory pivoting movement between the flap (2) and the compartment base (8) takes place via a flexible connection (23) between the flap (2) and the compartment base (8).

2. Glove box (1) according to Claim 1, **characterized in that** the first pivot axis (13) and the second pivot axis (14) run essentially parallel to each other.

3. Glove box according to either of Claims 1 and 2, **characterized in that** the compartment base (8) remains in its closed position (15') when the flap (2) is opened.

4. Glove box according to Claim 1, **characterized in that** the flexible connection is a cable (23).

5. Glove box according to Claim 4, **characterized in that** the cable (23) is made from steel.

6. Glove box according to Claim 4, **characterized in that** the cable (23) is a PES cable (polyethersulphone cable).

7. Glove box according to one of Claims 1 to 6, **characterized in that** the compartment base (8) is a housing part of an electrical appliance.

8. Glove box according to one of Claims 1 to 6, **characterized in that** the compartment base (8) forms a store for a log-book, a service manual or operating instructions of a motor vehicle.

9. Glove box according to one of Claims 1 to 6, **characterized in that** the compartment base (8) additionally has sidewalls (9), a rear wall (20) and a cover (15) such that the compartment base (8) becomes a receptacle (10) which is only opened forwards.

10. Glove box according to Claim 9, **characterized in that** the receptacle (10) forms a store for a log-book, a service manual or operating instructions of a motor vehicle.

11. Glove box according to Claim 9, **characterized in that** the receptacle (10) accommodates a CD changer (11).

## Revendications

1. Boîte à gants (1) dans un véhicule automobile, comprenant un volet (2) qui est monté de manière à pouvoir pivoter autour d'un premier axe de pivotement (13) entre une position d'ouverture (3) et une position de fermeture (3'), et une tablette (8) qui est disposée à l'intérieur de la boîte à gants (1), la tablette (8) étant montée de manière à pouvoir pivoter autour d'un deuxième axe de pivotement (14) entre une position ouverte (15) et une position fermée (15'), un mouvement de pivotement forcé étant produit entre le volet (2) et la tablette (8) de telle sorte que le volet (2) entraîne au moins dans son mouvement de fermeture la tablette (8) dans sa position fermée (15'), **caractérisée en ce que** le mouvement de pivotement forcé entre le volet (2) et la tablette (8) s'effectue par le biais d'une connexion flexible (23) entre le volet (2) et la tablette (8).

2. Boîte à gants (1) selon la revendication 1, **caractérisée en ce que** le premier axe de pivotement (13) et le deuxième axe de pivotement (14) s'étendent essentiellement parallèlement l'un à l'autre.

3. Boîte à gants selon l'une quelconque des revendications 1 ou 2, **caractérisée en ce que** la tablette (8) reste dans sa position fermée (15') lorsque le volet (2) est ouvert.

4. Boîte à gants selon la revendication 1, **caractérisée en ce que** la connexion flexible est un câble (23).

5. Boîte à gants selon la revendication 4, **caractérisée en ce que** le câble (23) est en acier.

6. Boîte à gants selon la revendication 4, **caractérisé en ce que** le câble (23) est un câble en PES (câble en polyéthersulfone).

7. Boîte à gants selon l'une quelconque des revendications 1 à 6, **caractérisée en ce que** la tablette (8) est une partie de boîtier d'un appareil électrique.

8. Boîte à gants selon l'une quelconque des revendications 1 à 6, **caractérisée en ce que** la tablette (8) forme un support pour un livre de bord, un manuel d'entretien ou un manuel d'utilisateur d'un véhicule automobile.

9. Boîte à gants selon l'une quelconque des revendications 1 à 6, **caractérisée en ce que** la tablette (8) présente en outre des parois latérales (9), une paroi arrière (20) et un couvercle (16), de sorte la tablette (8) constitue un logement (10) ne pouvant s'ouvrir que par l'avant.

10. Boîte à gants selon la revendication 9, **caractérisée en ce que** le logement (10) forme un support pour un livre de bord, un manuel d'entretien ou un manuel d'utilisateur d'un véhicule automobile.

11. Boîte à gants selon la revendication 9, **caractérisée en ce que** le logement (10) reçoit un changeur CD (11).
